# EUROPEAN PATENT SPECIFICATION

(11) **EP 2 976 854 B1**
(45) Date of publication and mention of the grant of the patent: **21.07.2021**
(21) Application number: 13710846.0
(22) Date of filing: 19.03.2013
(51) Int. Cl.: H04L 12/24, H04L 12/26

(54) **SYSTEM AND METHOD FOR RULE CREATION AND PARAMETER ADAPTATION BY DATA MINING IN A SELF-ORGANIZING NETWORK**
SYSTEM UND VERFAHREN ZUR REGELERZEUGUNG UND PARAMETERANPASSUNG DURCH DATA-MINING IN EINEM SELBSTORGANISIERENDEN NETZ
SYSTÈME ET PROCÉDÉ POUR LA CRÉATION DE RÈGLES ET L'ADAPTATION DE PARAMÈTRES PAR L'EXPLOITATION DE DONNÉES DANS UN RÉSEAU AUTO-ORGANISATEUR

(43) Date of publication of application: 27.01.2016
(73) Proprietor: Nokia Solutions and Networks Oy, 02610 Espoo (FI)
(72) Inventor: SUERBAUM, Clemens, 81379 Munich (DE)
(74) Representative: Nokia EPO representatives
(86) International application number: PCT/EP2013/055639
(87) International publication number: WO 2014/146690

(56) References cited:
- EP-A1- 1 998 252
- WO-A1-2010/086028
- WO-A1-2011/085806
- CHRISTOPH FRENZEL ET AL: "Automated rational recovery selection for self-healing in mobile networks", WIRELESS COMMUNICATION SYSTEMS (ISWCS), 2012 INTERNATIONAL SYMPOSIUM ON, IEEE, 28 August 2012 (2012-08-28), pages 41-45, XP032263718, DOI: 10.1109/ISWCS.2012.6328326 ISBN: 978-1-4673-0761-1
- "3rd Generation Partnership Project; Technical Specification Group Services and System Aspects; Telecommunication management; Self-Organizing Networks (SON); Self-healing concepts and requirements (Release 10)", 3GPP STANDARD; 3GPP TS 32.541, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 28 March 2011 (2011-03-28), pages 1-21, XP050476451, [retrieved on 2011-03-28]
- DMITRY NAMIOT ET AL: "Context-aware data discovery", INTELLIGENCE IN NEXT GENERATION NETWORKS (ICIN), 2012 16TH INTERNATIONAL CONFERENCE ON, IEEE, 8 October 2012 (2012-10-08), pages 134-141, XP032277542, DOI: 10.1109/ICIN.2012.6376016 ISBN: 978-1-4673-1527-2

## Description

### Technical Field:

Christoph Frenzel et al, "Automated rational recovery selection for self-healing in mobile networks", Wireless Communication Systems, 2012 International Symposium on, IEEE, 2012-08-28, pages 41-45, XP032263718 discloses a recovery selection that first exploits technical recovery knowledge expressed in rules to determine the set of possible recovery actions for a degradation situation, and determines the degree of rationality of these actions based on the operational goals of the operator. EP 1 998 252 A1 discloses generating computer configuration rules comprising receiving configuration data regarding a plurality of computers, analyzing the data to determine associations within the data, and generating configuration rules from a result of the analysis. WO 2011/085806 A1 discloses a management system comprising: a manager agent entity being capable of sending a request for the network element to measure a parameter indicated by a target to obtain a plurality of measured parameters and being capable of sending an achievement indication element related to the target; and an agent entity being capable of receiving the achievement indication element and being capable of determining a target achievement indication in respect of at least one measured parameter, having been determined as a result of monitoring the correspondence between the target and the at least one measured parameter.

The instant invention relates to a novel mechanism using data mining in a mobile network to create or adapt self-organizing network (SON) rules and, more particularly, relates to a system and method for performing analytics on "Big Data" mined in a mobile network and/or obtained from other sources, in order to create SON rules and adapt parameters.

Self-Organizing Networks adjust the configuration of their elements automatically. They do this both at installation time and during ongoing network operation. Especially during network operation such configuration changes should reflect the current situation in the network: Load, number of users, user behavior, service level agreements etc.

The ever rising numbers of network elements makes it a pure necessity that SON does almost all that formerly had been pre-planned or adjusted by human intervention.

Currently, SON algorithms are based on pre-analysis of potential problems in the network based on radio engineering knowledge. This means that engineers understanding the specific Radio Access Technology (like LTE), also heavily based on understanding and experiences of preceding RATs (like 3G), anticipate certain effects / problems based on theoretical work and simulations. Example: The network engineer foresees that in the case of misaligned hand-over thresholds a hand-over (HO) may take place too early and describes a rule of the kind: IF number of too early HO is bigger than a specific number of events/minute, THEN increase HO threshold by 2 dB. In a second step, it is necessary to implement this rule in the network: For that, a counter of too early HO events is defined, and the specific value to trigger the increase of the threshold is defined as configurable. It is preferable that these definitions are done in a multi vendor capable way. Therefore they are captured in standard specifications, e.g. at 3GPP (a global standardization body for mobile networks).

This pre- (and ongoing) analysis can be complemented by data mining mechanisms and, thus, can be done in a much more elaborate way. This makes it possible to identify correlations of events which are hardly or not at all detectable by a human. The next step is then to formulate a rule based on the identified correlations and convert the detected rule into behavior of network elements in the network. For efficient and fast implementation of newly detected correlations and corresponding rules, it takes too long to define all of them in specifications. That process may take months, sometimes years.

It is important to remember that all events which are detected as a root cause for the network behavior are detected using data which was originally provided by the network. That means: Measurements or notifications for these events are defined and implemented. Otherwise the event would not be part of the data collection. Therefore each root cause event can be determined based on existing measurements and notifications.

The establishment of a new SON rule today is very time consuming. Currently there is no automatic mechanism to support the design of new SON functions and thus to bring new SON algorithms into the network. If new useful rules for SON algorithms are detected a long chain of work needs to be started, which involves heavy involvement of humans - contradicting the basic SON principles.

While some rule creation could be enabled also mining today's operations support systems (OSS) typical data set sizes, in particular, data mining using "Big Data" will produce abundant new knowledge about occurrence and interdependencies of events and network behavior. Such data mining is usually done for network performance reporting and to create new or improved network plans. It is not currently known to- more or less - directly feed into the network control, instructions on how to prevent or cater to unwanted network behavior or suboptimal network performance based on this data. Additionally, conversion of this data into SON rules acting on the real network will most likely not take place, if no automated mechanism will exist. Consequently, the major capabilities and targets of SON - saving costs and optimizing resource usage - cannot be exploited to their full possible extent.

What is needed is a system and method that automates the conversion of knowledge obtained from data mining system information into SON rules for a real network.

### Disclosure of the Invention:

It is accordingly an object of this invention to provide a system and method for using data mined in a radio access network to generate SON rules and/or adapt SON parameters. The invention is defined in the independent claims. Advantageous embodiments are defined in the dependent claims.

In one particular aspect of the invention, a method is provided for creating or adapting a self-organizing network, SON, configuration rule at a "Big Data" system for a self-organizing radio access network, RAN (i.e., the SON network being a mobile network including its radio access network and its transport network), the "Big Data" system comprising: a data analysis component; a rule creation engine; and an interface to an element management system, the element management system comprising at least a rule translation engine and a rule execution engine and an interface to network elements, the network elements also comprising the interface to the element management system and at least a rule translation engine and a rule execution engine, and the network elements representing a RAN node or function each in the self-organizing RAN. The method comprises the steps of: obtaining, at the data analysis component, data relating to the self-organizing radio access network, the obtained data includes "Big Data" mined from the "Big Data" system relating to the RAN and data received from other data sources; performing, by the data analysis component, analytics on the obtained data to identify occurrence and interdependencies of events and network behaviour; automatically creating, by the rule creation engine (112), a new SON configuration rule or adapting an existing rule, based on the results of the analytics and converting the rule into a list of event-condition-action parameters by identifying parameters associated with the rule, including: a parameter identifying a triggering event; a parameter defining a condition to be evaluated in the event of the triggering event; and a parameter describing an action to be taken upon the occurrence of a triggering event; providing, by the rule creation engine, the parameters to a rule translation engine of the element management system or to at least one network element for identifying at the rule translation engine which network element or management system can detect the event and relaying the parameters to a rule execution engine of said identified network element or element management system; detecting, by the rule execution engine of the identified network element or element management system, the triggering event; evaluating, by the rule execution engine, the condition, and informing, a configuration engine to perform the action associated with the rule; and in accordance with the rule, performing an action to change a configuration of a network element.

In one particular aspect of a "Big Data" system, for a self-organizing radio access network, RAN, for creating or adapting a self-organizing network, SON, configuration rule, the "Big Data" system comprises: a data analysis component; a rule creation engine; and an interface to an element management system, the element management system comprising at least a rule translation engine and a rule execution engine and an interface to network elements, the network elements also comprising the interface to the element management system and at least a rule translation engine and a rule execution engine, and the network elements representing a RAN node or function each in the self-organizing RAN. The "Big Data" system is configured to: obtain, at the data analysis component, data relating to the self-organizing radio access network, the obtained data includes "Big Data" mined from the "Big Data" system relating to the RAN and data received from other data sources; perform, by the data analysis component, analytics on the obtained data to identify occurrence and interdependencies of events and network behaviour; automatically create, by the rule creation engine, a new SON configuration rule or adapting an existing rule, based on the results of the analytics and converting the rule into a list of event-condition-action parameters by identifying parameters associated with the rule, including: a parameter identifying a triggering event; a parameter defining a condition to be evaluated in the event of the triggering event; and a parameter describing an action to be taken upon the occurrence of a triggering event; provide, by the rule creation engine, the parameters to a rule translation engine of the element management system or to at least one network element for identifying at the rule translation engine which network element or management system can detect the event and relaying the parameters to a rule execution engine of said identified network element or element management system; detect, by the rule execution engine of the identified network element or element management system, the triggering event; evaluate, by the rule execution engine, the condition, and informing, a configuration engine to perform the action associated with the rule; and
in accordance with the rule, perform an action to change a configuration of a network element.

Although the invention is illustrated and described herein as embodied in a system and method self-organizing network rule creation and parameter adaptation by data mining, it is nevertheless not intended to be limited to the details shown, since various modifications and structural changes may be made therein within the scope of the claims.

The construction of the invention, however, together with the additional objects and advantages thereof will be best understood from the following description of the specific embodiments when read in connection with the accompanying drawings.

### Brief Description of the Drawings:

The present invention is illustrated by way of example, and not by way of limitation, in the figures of the accompanying drawings, in which like reference numerals refer to similar elements and in which:
Fig. 1 is a simplified block diagram of a system architecture with basic building blocks and respective data and control flow with rule translation and execution in an element management system according to one particular embodiment of the present invention;
Fig. 2 is a simplified block diagram of a system architecture with basic building blocks and respective data and control flow with rule translation and execution in an element management system and rule execution in the network element according to one particular embodiment of the present invention;
Fig.3 is a simplified block diagram of a system architecture with basic building blocks and respective data and control flow with rule translation and execution in a network element according to one particular embodiment of the present invention;
Fig. 4 is a block diagram illustrating the generation of new SON coordination rules from data generated during a SON verification process in accordance with one particular embodiment of the invention;
Fig. 5 is an exemplary block diagram of a method for creating a rule in a SON Network in accordance with one particular embodiment of the present invention.

### Best Mode for Carrying out the Invention:

The present invention relates to a system and method of using data mining, and in particularly, the analytics performed on "Big Data", generated from a mobile network - potentially combined with data from other sources - to create or adapt SON rules. In particular, Big Data mining permits correlations between network events, behavior and properties of users and network behavior to be found, as well as, configuration changes needed to improve network performance in these cases.

The invention allows the network operator to define events, conditions and corresponding actions in a way which reduces the need for human interaction and allows automation of SON rules based on these definitions. In one particular embodiment, the invention can be used in a radio access network operating in accordance with the specifications defined by the 3GPP SA5 Telecom Management Working Group ("Information Service"), as provided in effect at the date of filing of the present application. However, this is not meant to be limiting, as it will be appreciated that the system and method of the invention can be used with other radio access network protocols.

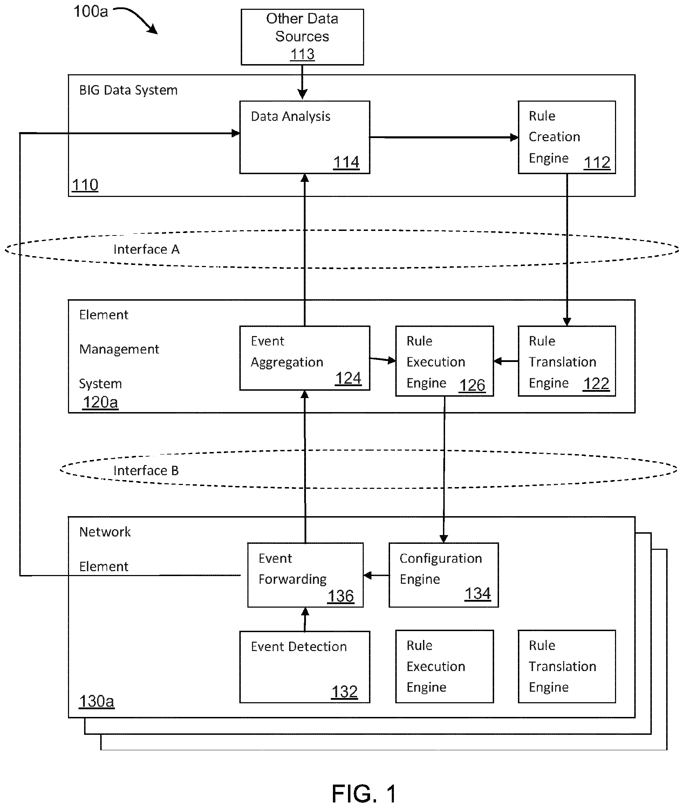

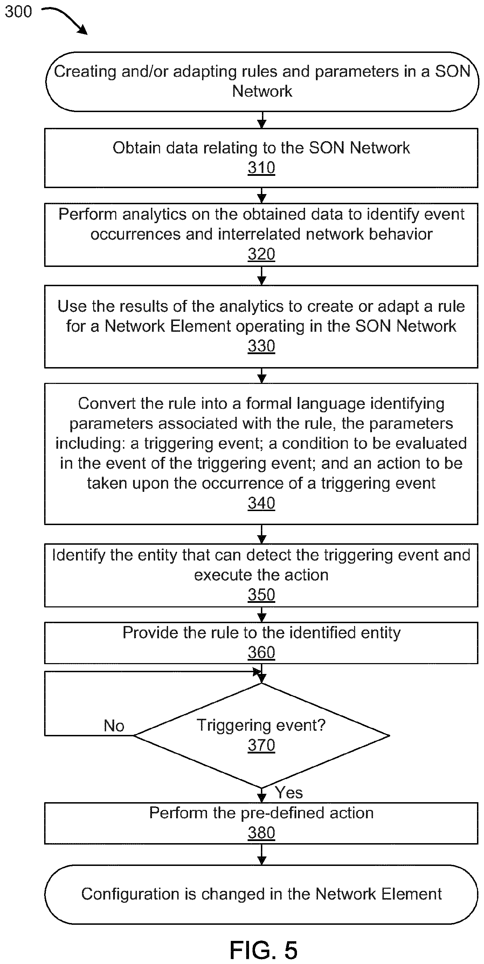

Referring now to Figs. 1 - 3 and 5, there are shown a method 300 for creating and/or adapting rules and parameters in a SON network and different particular embodiments of system 100a, 100b, 100c, for performing the method 300. The systems 100a, 100b, 100c illustrate the basic building blocks of a system architecture and the interactions used in creating a rule, based on analytics performed on "Big Data" gathered in connection with a radio access network (for example, a 3GPP network) and its transport network and translating and executing the rule created based on identified parameters, in accordance with particular embodiments of the present invention. As discussed above, data mining is performed on the network, traditionally, in order to generate performance reports and to create new or improved network plans. Step 310. More particularly, data is mined by the network management layer, which, in the present embodiments is a "Big Data" system 110. If desired, the "Big Data" system 110 can obtain data relating to the network from other data sources 113, located outside of the "Big Data" system 110, for use in addition to, or instead of, "Big Data" mined by the "Big Data" system 110.

For example, other data sources 113 can provide data relating to the personal preferences of mobile users, e.g. an interest in soccer, to the "Big Data" system 110. In accordance with the principles of the present invention, analytics are performed on the mined data to identify occurrence and interdependencies of events and network behavior. Step 320. If data is obtained from other data sources 113, as well, this information can additionally be used to adjust/optimize the network. For example, if there is a big soccer match on a streaming channel and the system determines that many soccer fans are in the cell (based on the data from the other data sources 113), the "Big Data" system 110 can be used to predict that a higher than usual bandwidth will be required, and can adjust the network accordingly.

In one particular embodiment of the invention, a rule creation engine 112 of a "Big Data" system 110 uses the results of analytics (i.e., illustrated by the "data analysis" block 114) performed on "Big Data" and, optionally, on data from other sources 113 outside of the Big Data system 110, to create a new rule or adapt an existing rule affecting a network element 130a, 130b, 130c, operating in the mobile network (i.e., the SON Network). Step 330. The creation of this rule is automated, i.e., it is performed automatically by the rule creation engine 112 in response to the analytics generated from the mined data and/or other data, without human interaction. In the present embodiments, the rule creation engine 112 is provided in the "Big Data" system level or layer of the network.

Subsequently, the resulting rule (new or adapted) produced by the rule creation engine 112 is automatically converted by the system into a formal language identifying parameters associated with the rule, e.g., in a list of event-condition-action (ECA) policies or parameters. In the present invention, one parameter identifies a triggering event, so that it is possible for a rule translation engine to determine if an existing rule should be changed (identifier was used before) or if a new rule should be created (unused identifier); another parameter defines the conditions to be evaluated if the triggering event happens; and another parameter describes the action to be taken in case the triggering event happens. Step 340. The action could be, for example, a change in the configuration of one or several network elements in the SON network.

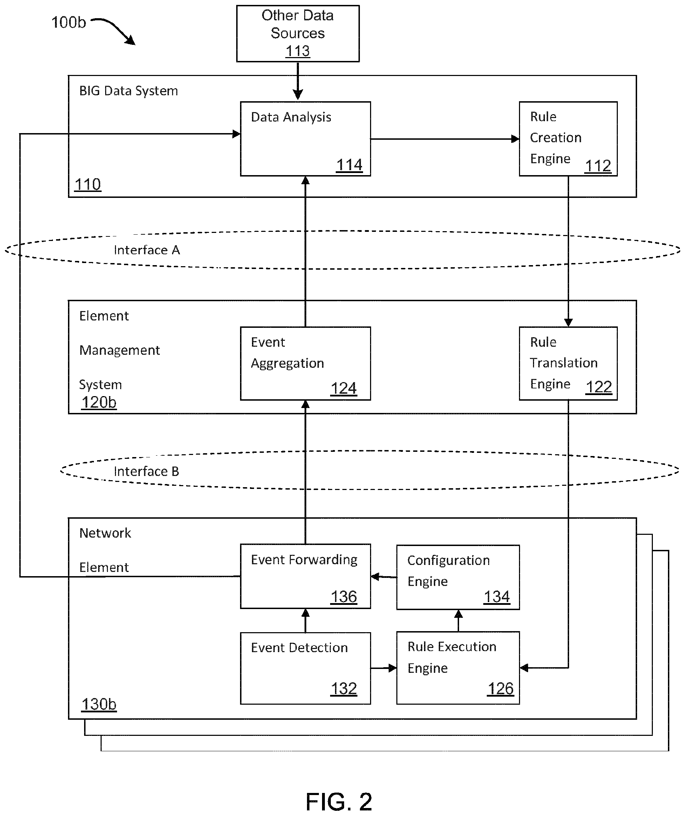

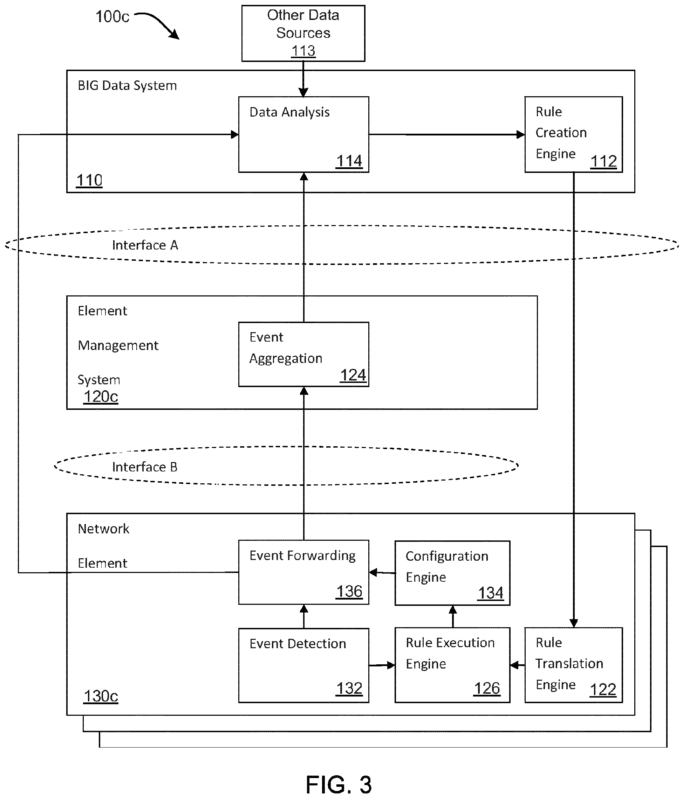

More particularly, in the present embodiments, the parameters (i.e., the parameters for triggering event, condition to be evaluated and action to be taken), are sent via an interface (i.e., Interface A and/or Interface B), to a so-called "rule translation engine" 122. In one particular embodiment of the invention, the rule translation engine 122 is embodied in software executed as part of the element management system 120a, 120b, as shown more particularly in Figs. 1 and 2, where events are aggregated ("Event Aggregation" 124) or "counted", and which includes the systems and applications for managing the network element(s). Alternately, the rule translation engine 122 can be embodied directly in the network element, for example, in the network element 130c of Fig. 3. Although only one network element is shown in each of Figs. 1 - 3, it should be understood that a plurality of network elements 130a, 130b and/or 130c will be present in the network. Similarly, it should be understood that, although only one element management system (EMS) 120a, 120b, 120c is illustrated in each of Figs. 1, 2 and 3, this is not meant to be limiting, as there can be several EMSs in each of the systems 100a, 100b, 100c. For example, although one EMS manages several network elements (with one network element usually being managed by exactly one EMS), there could be different EMSs for network monitoring/alarming, configuration, etc.

Referring back to Figs. 1 - 3 and 5, the rule translation engine 122 identifies which entity (referred to as "rule execution engine" 126) can detect the triggering event and execute the action. Step 350. The rule translation engine 122 relays the rule to the rule execution engine 126. Step 360. As with the rule translation engine 122, the rule execution engine 126 can be located in, for example, the element management system (see, for example, element management system 120a of Fig. 1) or directly in the network element (see, for example, network elements 130b, 130c of Figs. 2 and 3, respectively). The rule execution engine 126 monitors for the occurrence of a trigger event occurring with regard to the network element 130a, 130b, 130c (i.e., illustrated by the "event detection" block 132). Step 370. If it is detected that a triggering event occurred, the rule execution engine informs a configuration engine 134, located in the network element 130a and/or 130b and/or 130c, to perform the action described in the associated SON rule (which, in the present example, is a change in configuration of the network element 130a and/or 130b and/or 130c). Step 380.

Once the change has been successfully performed, the performance of the change is reported via the usual event forwarding mechanisms (i.e., illustrated by "event forwarding" block 136) to one or more of the element management system 120a, 120b or 120c and/or the Big Data system 110, depending on the settings of the event forwarding 136.

One particular example of a protocol neutral specification for defining and implementing one particular embodiment of the invention will now be provided herebelow, wherein capital letters represent section numbers of specifications. It should be noted, however, that the below example is not meant to be limiting, as similar data for SON rules could be configured in different ways from the given example.

### L.M.N Information object class SONRule

### L.M.N.1 Definition:

This IOC represents a SON rule.

### L.M.N.2 Attributes:

| Attribute name | Support Qualifier | Read Qualifier | Write Qualifier |
|---|---|---|---|
| id | Mandatory | Mandatory | - |
| triggeringEvent | Mandatory | Mandatory | Optional |
| triggeredAction | Mandatory | Mandatory | Optional |
| sonRuleStatus | Optional | Mandatory | Mandatory |

### L.M.N.3 Notifications:

For creation, deletion or attributeValueChange.

### L.P.1 Information attribute definition and legal values

| Attribute Name | Definition | Legal Values |
|---|---|---|
| id | It identifies uniquely an instance of its object class | String |
| triggeringCondition | It defines the conditions to be evaluated if the triggering event happens | List of ConditionEvaluations |
| | | ConditionEvaluations: Sequence of dataDescription, Operator, dataDescription Operator: equal, bigger, smaller, contains etc. |
| triggeredAction | It describes the action to be taken in case the triggering event happens | List of ConfigurationChanges |
| | | ConfigurationChange: Sequence of parameterName/parameterValue pairs |
| sonRuleStatus | It describes whether the rule is currently active or not | active, suspended |

### Q.S.1 Operation createSONrule

### Q.S.1.1 Definition:

This operation allows the establishment of a new SONrule.

### Q.S.1.2 Input parameters:

| Parameter Name | Qualifier | Matching Information | Comment |
|---|---|---|---|
| id | Mandatory | sONRuleTypeModule.sonRuleld | - |
| triggeringCondition | Mandatory | sONRuleTypeModule.triggeringCondition | - |
| triggeredAction | Mandatory | sONRuleTypeModule.triggeredAction | - |

### Q.S.1.3 Output parameters:

| Parameter Name | Qualifier | Matching Information | Comment |
|---|---|---|---|
| Result | M | sONRuleTypeModule.result | Possible values: success; notUniqueldentifier; unspecified Error |

### Q.S.1.4 Pre-condition:

No such rule exists.

### Q.S.1.5 Post-condition:

SONrule is made known to the system, which prepares a possible activation. sonRuleStatus is "suspended". Output parameter result is set to success.

### Q.S.1.6 Exceptions:

Rule identifier is already in use:
Creation is rejected. Output parameter result is set to notUniqueIdentifier.

### Q.S.2 changeSONruleStatus

### Q.S.2.1 Definition:

This operation allows changing the status of a SONrule.

### Q.S.2.2 Input parameters:

| Parameter Name | Qualifier | Matching Information | Comment |
|---|---|---|---|
| id | Mandatory | sONRuleTypeModule.sonRuleld | - |
| sonRuleStatus | Mandatory | sONRuleTypeModule.sonRuleStatus | - |

### Q.S.2.3 Output parameters:

| Parameter Name | Qualifier | Matching Information | Comment |
|---|---|---|---|
| Result | M | sONRuleTypeModule.result | Possible values: success; noSuchIdentifier; unspecified Error |

### Q.S.2.4 Pre-condition:

Identified SONrule exists.

### Q.S.2.5 Post-condition:

SONrule is active or suspended as requested via input parameter sonRuleStatus. sonRuleStatus in information object SONrule reflects this value. Output parameter result is set to success.

### Q.S.2.6 Exceptions:

Rule identifier is not in use:
Change is rejected. Output parameter result is set to noSuchldentifier.

### Q.S.3 changeSONruleStatus

### Q.S.3.1 Definition:

This operation allows changing the status of a SONrule.

### Q.S.3.2 Input parameters:

| Parameter Name | Qualifier | Matching Information | Comment |
|---|---|---|---|
| id | Mandatory | sONRuleTypeModule.sonRuleld | - |
| triggeringCondition | Mandatory | sONRuleTypeModule.triggeringCondition | - |
| triggeredAction | Mandatory | sONRuleTypeModule.triggeredAction | - |

### Q.S.3.3 Output parameters:

| Parameter Name | Qualifier | Matching Information | Comment |
|---|---|---|---|
| Result | M | sONRuleTypeModule.result | Possible values: success; noSuch Identifier; unspecified Error |

### Q.S.3.4 Pre-condition:

Identified SONrule exists.

### Q.S.3.5 Post-condition:

SONrule is changed as requested via input parameters triggeringCondition and triggeredAction. sonRuleStatus stays unchanged. Output parameter result is set to success.

### Q.S.3.6 Exceptions:

Rule identifier is not in use:
Change is rejected. Output parameter result is set to noSuchIdentifier.

Please note that, although described herein in connection with SON rules detected and/or derived for systems in which Big Data is analyzed, the invention is not intended to be limited only thereto. Rather, the present invention, wherein a system is informed of rules on how to behave in case of specific events, could also be used for SON rules that are detected for system not analyzed by Big Data mechanisms. This holds true for new systems that do not provide sufficient amounts of data for a Big Data mechanism, or where the first set of rules comes from predictions made by the system designers. In these cases, the parameters describing triggering events and triggered actions, and the rule identifier, can be assigned in a non-automatic way.

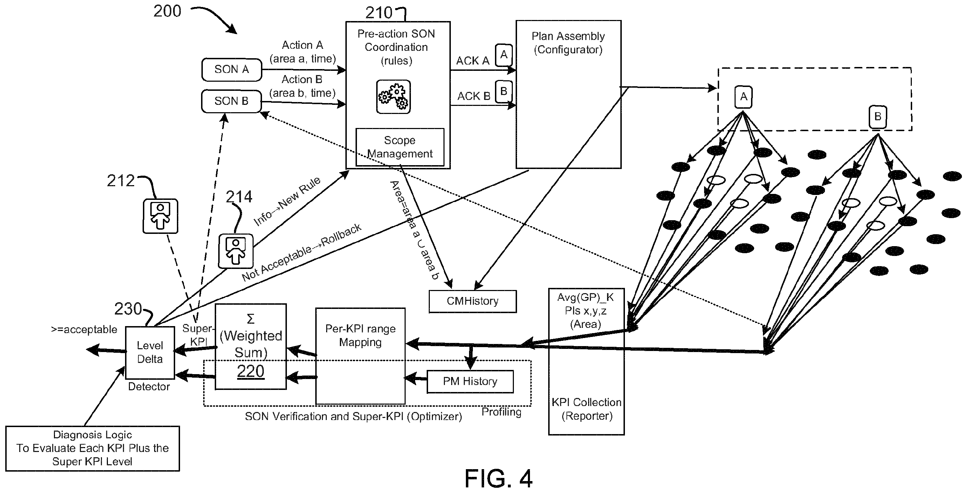

Referring now to Fig. 4, there is shown a system 200 for generating new SON coordination rules from data generated during a SON verification process. A goal of SON verification is to verify the impact of a set of SON actions (which have passed the pre-action SON coordination 210 implemented as rules). To do this, a weighted sum of several individual key performance indicators (KPIs) is generated (see block 220) to produce some form of an aggregated key performance indicator (the "Super-KPI"). An anomaly detector 230 evaluates this set of Super-KPIs so computed. The anomaly detector 230 identifies recurring conditions where a set of changes is made that leads to a significant degradation in performance. The knowledge generated in the anomaly detector 230 can be formulated as rules and can be added to the pre-action SON coordination 210 ("info → new rule"). Previously, in a system such as is shown in Fig. 4, it was assumed that some human level verification 212 and/or formulation of the new rules 214 is required. However, the human-level involvement 212, 214 can be eliminated, or at least significantly reduced, by replacing it with the automated rule creation, transformation and deployment process described herein in accordance with the present invention.

Additionally, it should be understood that the network devices or network elements and their functions described herein may be implemented by software, e.g. by a computer program product for a computer, or by hardware. In any case, for executing their respective functions, correspondingly used devices, such as the user equipment, access nodes, MME, S-GW, P-GW, CEM, location server, etc., include several means and components (not shown) which are required for control, processing and communication/signaling functionality. Such means may comprise, for example, a processor unit for executing instructions, programs and for processing data, memory means for storing instructions, programs and data, for serving as a work area of the processor and the like (e.g. ROM, RAM, EEPROM, and the like), input means for inputting data and instructions by software (e.g. USB memory stick, CD-ROM, EEPROM, and the like), user interface means for providing monitor and manipulation possibilities to a user (e.g. a screen, a keyboard, a mouse, a touchscreen and the like), interface means for establishing links and/or connections under the control of the processor unit (e.g. wired and wireless interface means, an antenna, etc.) and the like.

For the purpose of the present invention as described herein above, it should be noted that:
- an access technology via which signaling is transferred to and from a network element or node may be any technology by means of which a node can access an access network (e.g. via a base station or generally an access node). Any present or future technology, such as WLAN (Wireless Local Access Network), WiMAX (Worldwide Interoperability for Microwave Access), BlueTooth, Infrared, NFC (Near Field Communication), and the like may be used; although the above technologies are mostly wireless access technologies, e.g. in different radio spectra, access technology in the sense of the present invention implies also wirebound technologies, e.g. IP based access technologies like cable networks or fixed lines but also circuit switched access technologies; access technologies may be distinguishable in at least two categories or access domains such as packet switched and circuit switched, but the existence of more than two access domains does not impede the invention being applied thereto,
- usable access networks may be any device, apparatus, unit or means by which a station, entity or other user equipment may connect to and/or utilize services offered by the access and transport network; such services include, among others, data and/or (audio-) visual communication, data download etc.;
- a user equipment may be any device, apparatus, unit or means by which a system user or subscriber may experience services from an access and transport network, such as a mobile phone, tablet, personal digital assistant PDA, or computer;
- method steps likely to be implemented as software code portions and being run using a processor at a network element or terminal (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, apparatuses, units or means likely to be implemented as hardware components at a terminal or network element, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, apparatuses, units or means can be implemented as individual devices, apparatuses, units or means, but this does not exclude that they are implemented in a distributed fashion throughout the system, as long as the functionality of the device, apparatus, unit or means is preserved,
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

Many modifications and other embodiments of the inventions set forth herein will come to mind to one skilled in the art to which these inventions pertain having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments within the scope of the appended claims. In this regard, for example, different combinations of elements and/or functions other than those explicitly described above are also contemplated as may be set forth in some of the appended claims. Although specific terms are employed herein, they are used in a generic and descriptive sense only and not for purposes of limitation.

It should be noted, that reference signs in the claims shall not be construed as limiting the scope of the claims. Additionally, although the invention is illustrated and described herein as embodied in a system and method for self-organizing network rule creation and parameter adaptation by data mining, it is nevertheless not intended to be limited to only these details shown, as various modifications and structural changes may be made therein within the scope of the claims.

## Claims

1. A method (300) for creating or adapting a self-organizing network, SON, configuration rule at a "Big Data" system (110) for a self-organizing radio access network, RAN (100a, 100b or 100c), the "Big Data" system comprising: a data analysis component (114); a rule creation engine (112); and an interface to an element management system, the element management system comprising at least a rule translation engine and a rule execution engine and an interface to network elements, the network elements also comprising the interface to the element management system and at least a rule translation engine and a rule execution engine, and the network elements representing a RAN node or function each in the self-organizing RAN,
the method comprising the steps of:
obtaining, at the data analysis component, data relating to the self-organizing radio access network (100a, 100b, or 100c, 310), the obtained data includes "Big Data" mined from the "Big Data" system (110) relating to the RAN and data received from other data sources;
performing, by the data analysis component (114), analytics on the obtained data (320) to identify occurrence and interdependencies of events and network behaviour;
automatically creating, by the rule creation engine, a new SON configuration rule or adapting an existing rule, based on the results of the analytics and converting the rule into a list of event-condition-action parameters by identifying (340) parameters associated with the rule, including: a parameter identifying a triggering event; a parameter defining a condition to be evaluated in the event of the triggering event; and a parameter describing an action to be taken upon the occurrence of a triggering event;
providing, by the rule creation engine, the parameters to a rule translation engine of the element management system or to at least one network element for identifying at the rule translation engine which network element or management system can detect the event and relaying the parameters to a rule execution engine of said identified network element or element management system;
detecting, by the rule execution engine (126) of the identified network element or element management system, the triggering event;
evaluating, by the rule execution engine (126), the condition, and informing, a configuration engine (134) to perform the action associated with the rule; and
in accordance with the rule, performing an action (380) to change a configuration of a network element (130a, 130b or 130c).

2. The method according to claim 1, further including the step of executing the provided new or adapted rule, including:
determining the occurrence of a triggering event (370);
evaluating pre-identified conditions if it is determined that the triggering event occurred; and
taking a pre-identified action based on the triggering event and/or the evaluated pre-identified conditions.

3. The method according to claim 2, further including the steps of identifying the rule execution engine (126) that can detect the triggering event and/or execute the action to be taken (350).

4. The method according to claim 3, wherein the identifying step occurs in the element management system layer (120a, 120b or 120c) or in the network element (130a, 130b or 130c).

5. The method according to claim 4, wherein the rule execution engine (126) that can detect the triggering event and/or execute the action to be taken is included in the element management system layer (120a, 120b or 120c) or in the network element (130a, 130b or 130c).

6. A "Big Data" system (110), for a self-organizing radio access network, RAN (100a, 100b or 100c), for creating or adapting a self-organizing network, SON, configuration rule, the "Big Data" system comprising: a data analysis component (114); a rule creation engine (112); and an interface to an element management system, the element management system comprising at least a rule translation engine and a rule execution engine and an interface to network elements, the network elements also comprising the interface to the element management system and at least a rule translation engine and a rule execution engine, and the network elements representing a RAN node or function each in the self-organizing RAN,
the "Big Data" system configured to:
obtain, at the data analysis component, data relating to the self-organizing radio access network (100a, 100b, or 100c, 310), the obtained data includes "Big Data" mined from the "Big Data" system (110) relating to the RAN and data received from other data sources;
perform, by the data analysis component (114), analytics on the obtained data (320) to identify occurrence and interdependencies of events and network behaviour;
automatically create, by the rule creation engine (112), a new SON configuration rule or adapting an existing rule, based on the results of the analytics and converting the rule into a list of event-condition-action parameters by identifying (340) parameters associated with the rule, including: a parameter identifying a triggering event; a parameter defining a condition to be evaluated in the event of the triggering event; and a parameter describing an action to be taken upon the occurrence of a triggering event;
provide, by the rule creation engine, the parameters to a rule translation engine of the element management system or to at least one network element for identifying at the rule translation engine which network element or management system can detect the event and relaying the parameters to a rule execution engine of said identified network element or element management system;
detect, by the rule execution engine (126) of the identified network element or element management system, the triggering event;
evaluate, by the rule execution engine (126), the condition, and informing, a configuration engine (134) to perform the action associated with the rule; and
in accordance with the rule, perform an action (380) to change a configuration of a network element (130a, 130b or 130c).

7. The "Big Data" system (110) according to claim 6, wherein the "Big Data" system is further configured to execute the provided new or adapted rule, including:
determine the occurrence of a triggering event (370);
evaluate pre-identified conditions if it is determined that the triggering event occurred; and
take a pre-identified action based on the triggering event and/or the evaluated pre-identified conditions.

8. The "Big Data" system (110) according to claim 7, wherein the "Big Data" system is further configured to identify the rule execution engine (126) that can detect the triggering event and/or execute the action to be taken (350).

9. The "Big Data" system (110) according to claim 8, wherein the identify step occurs in the element management system layer (120a, 120b or 120c) or in the network element (130a, 130b or 130c).

10. The "Big Data" system (110) according to claim 9, wherein the rule execution engine (126) that can detect the triggering event and/or execute the action to be taken is included in the element management system layer (120a, 120b or 120c) or in the network element (130a, 130b or 130c).

## Patentansprüche

1. Verfahren (300) zum Erstellen oder Anpassen einer Auslegungsregel für ein selbstorganisierendes Netzwerk, SON, in einem "Massendaten"-System (110) für ein selbstorganisierendes Funkzugangsnetzwerk, RAN (100a, 100b oder 100c), wobei das "Massendaten"-System Folgendes umfasst: eine Datenanalysekomponente (114); eine Regelerstellungsmaschine (112) und eine Schnittstelle zu einem Elementverwaltungssystem, das mindestens eine Regelübersetzungsmaschine und eine Regelausführungsmaschine und eine Schnittstelle zu Netzwerkelementen umfasst, wobei die Netzwerkelemente ebenfalls die Schnittstelle zum Elementverwaltungssystem und mindestens eine Regelübersetzungsmaschine und eine Regelausführungsmaschine umfassen und wobei die Netzwerkelemente einen RAN-Knoten oder eine RAN-Funktion jeweils im selbstorganisierenden RAN repräsentieren,
wobei das Verfahren die folgenden Schritte umfasst:
Erhalten von Daten, die das selbstorganisierende Funkzugangsnetzwerk (100a, 100b, oder 100c, 310) betreffen, an der Datenanalysekomponente, wobei die erhaltenen Daten "Massendaten", die aus dem "Massendaten"-System (110) das das RAN betrifft, entnommen wurden, und Daten, die von anderen Datenquellen empfangen wurden, beinhalten;
Durchführen einer Analyse an den erhaltenen Daten (320) durch die Datenanalysekomponente (114), um das Auftreten und Interdependenzen von Ereignissen und Netzwerkverhalten zu identifizieren;
automatisches Erstellen einer neuen SON-Auslegungsregel oder Anpassen einer bestehenden Regel durch die Regelerstellungsmaschine auf Basis der Ergebnisse der Analyse und Umwandeln der Regel in eine Liste von Ereignis-Bedingung-Maßnahme-Parametern durch Identifizieren (340) von Parametern, die mit der Regel verknüpft sind und Folgendes beinhalten: einen Parameter, der ein Auslöseereignis identifiziert; einen Parameter, der eine Bedingung definiert, die im Fall des Auslöseereignisses zu beurteilen ist; und einen Parameter, der eine Maßnahme beschreibt, die nach Auftreten des Auslöseereignisses zu ergreifen ist;
Bereitstellen der Parameter durch die Regelerstellungsmaschine für eine Regelübersetzungsmaschine des Elementverwaltungssystems oder für mindestens ein Netzwerkelement zum Identifizieren an der Regelübersetzungsmaschine, welches Netzwerkelement oder Verwaltungssystem das Ereignis detektieren kann, und Weiterleiten der Parameter zu einer Regelausführungsmaschine des identifizierten Netzwerkelements oder Elementverwaltungssystems;
Detektieren des Auslöseereignisses durch die Regelausführungsmaschine (126) des identifizierten Netzwerkelements oder Elementverwaltungssystems;
Beurteilen der Bedingung durch die Regelausführungsmaschine (126) und Hinweisen einer Auslegungsmaschine (134) darauf, dass die mit der Regel verknüpfte Maßnahme durchzuführen ist; und
Durchführen einer Maßnahme (380) gemäß der Regel, um eine Auslegung eines Netzwerkelements (130a, 130b oder 130c) zu ändern.

2. Verfahren nach Anspruch 1, das ferner den Schritt des Ausführens der bereitgestellten neuen oder angepassten Regel beinhaltet, was Folgendes beinhaltet:
Bestimmen des Auftretens eines Auslöseereignisses (370);
Beurteilen von zuvor identifizierten Bedingungen, wenn bestimmt wird, dass das Auslöseereignis aufgetreten ist; und
Ergreifen einer zuvor identifizierten Maßnahme auf Basis des Auslöseereignisses und/oder der Beurteilung der zuvor identifizierten Bedingungen.

3. Verfahren nach Anspruch 2, das ferner die Schritte des Identifizierens der Regelausführungsmaschine (126), die das Auslöseereignis detektieren und/oder die zu ergreifende (350) Maßnahme ausführen kann, beinhaltet.

4. Verfahren nach Anspruch 3, wobei der Schritt des Identifizierens in der Elementverwaltungssystemschicht (120a, 120b oder 120c) oder im Netzwerkelement (130a, 130b oder 130c) erfolgt.

5. Verfahren nach Anspruch 4, wobei die Regelausführungsmaschine (126), die das Auslöseereignis detektieren und/oder die zu ergreifende Maßnahme ausführen kann, in der Elementverwaltungssystemschicht (120a, 120b oder 120c) oder im Netzwerkelement (130a, 130b oder 130c) beinhaltet ist.

6. "Massendaten"-System (110) für ein selbstorganisierendes Funkzugangsnetzwerk, RAN (100a, 100b oder 100c) zum Erstellen oder Anpassen einer Auslegungsregel für ein selbstorganisierendes Netzwerk, SON, wobei das "Massendaten"-System Folgendes umfasst: eine Datenanalysekomponente (114); eine Regelerstellungsmaschine (112) und eine Schnittstelle zu einem Elementverwaltungssystem, das mindestens eine Regelübersetzungsmaschine und eine Regelausführungsmaschine und eine Schnittstelle zu Netzwerkelementen umfasst, wobei die Netzwerkelemente ebenfalls die Schnittstelle zum Elementverwaltungssystem und mindestens eine Regelübersetzungsmaschine und eine Regelausführungsmaschine umfassen und wobei die Netzwerkelemente einen RAN-Knoten oder eine RAN-Funktion jeweils im selbstorganisierenden RAN repräsentieren,
wobei das "Massendaten"-System zu Folgendem ausgelegt ist:
Erhalten von Daten, die das selbstorganisierende Funkzugangsnetzwerk (100a, 100b, oder 100c, 310) betreffen, an der Datenanalysekomponente, wobei die erhaltenen Daten "Massendaten", die aus dem "Massendaten"-System (110), das das RAN betrifft, entnommen wurden, und Daten, die von anderen Datenquellen empfangen wurden, beinhalten;
Durchführen einer Analyse an den erhaltenen Daten (320) durch die Datenanalysekomponente (114), um das Auftreten und Interdependenzen von Ereignissen und Netzwerkverhalten zu identifizieren;
automatisches Erstellen einer neuen SON-Auslegungsregel oder Anpassen einer bestehenden Regel durch die Regelerstellungsmaschine (112) auf Basis der Ergebnisse der Analyse und Umwandeln der Regel in eine Liste von Ereignis-Bedingung-Maßnahme-Parametern durch Identifizieren (340) von Parametern, die mit der Regel verknüpft sind und Folgendes beinhalten: einen Parameter, der ein Auslöseereignis identifiziert; einen Parameter, der eine Bedingung definiert, die im Fall des Auslöseereignisses zu beurteilen ist; und einen Parameter, der eine Maßnahme beschreibt, die nach Auftreten des Auslöseereignisses zu ergreifen ist;
Bereitstellen der Parameter durch die Regelerstellungsmaschine für eine Regelübersetzungsmaschine des Elementverwaltungssystems oder für mindestens ein Netzwerkelement zum Identifizieren an der Regelübersetzungsmaschine, welches Netzwerkelement oder Verwaltungssystem das Ereignis detektieren kann, und Weiterleiten der Parameter zu einer Regelausführungsmaschine des identifizierten Netzwerkelements oder Elementverwaltungssystems;
Detektieren des Auslöseereignisses durch die Regelausführungsmaschine (126) des identifizierten Netzwerkelements oder Elementverwaltungssystems;
Beurteilen der Bedingung durch die Regelausführungsmaschine (126) und Informieren einer Auslegungsmaschine (134), die mit der Regel verknüpfte Maßnahme durchzuführen; und
Durchführen einer Maßnahme (380) gemäß der Regel, um eine Auslegung eines Netzwerkelements (130a, 130b oder 130c) zu ändern.

7. "Massendaten"-System (110) nach Anspruch 6, wobei das "Massendaten"-System ferner dazu ausgelegt ist, die bereitgestellte neue oder angepasste Regel auszuführen, was Folgendes beinhaltet:
Bestimmen des Auftretens eines Auslöseereignisses (370);
Beurteilen von zuvor identifizierten Bedingungen, wenn bestimmt wird, dass das Auslöseereignis aufgetreten ist; und
Ergreifen einer zuvor identifizierten Maßnahme auf Basis des Auslöseereignisses und/oder der Beurteilung der zuvor identifizierten Bedingungen.

8. "Massendaten"-System (110) nach Anspruch 7, wobei das "Massendaten"-System ferner dazu ausgelegt ist, die Regelausführungsmaschine (126), die das Auslöseereignis detektieren und/oder die zu ergreifende (350) Maßnahme ausführen kann, zu identifizieren.

9. "Massendaten"-System (110) nach Anspruch 8, wobei der Schritt des Identifizierens in der Elementverwaltungssystemschicht (120a, 120b oder 120c) oder im Netzwerkelement (130a, 130b oder 130c) erfolgt.

10. "Massendaten"-System (110) nach Anspruch 9, wobei die Regelausführungsmaschine (126), die das Auslöseereignis detektieren und/oder die zu ergreifende Maßnahme ausführen kann, in der Elementverwaltungssystemschicht (120a, 120b oder 120c) oder im Netzwerkelement (130a, 130b oder 130c) beinhaltet ist.

## Revendications

1. Procédé (300) pour la création ou l'adaptation d'une règle de configuration de réseau auto-organisateur, SON, au niveau d'un système à « données massives » (110) pour un réseau d'accès radio, RAN, auto-organisateur (100a, 100b ou 100c), le système à « données massives » comprenant : un composant d'analyse de données (114) ; un moteur de création de règle (112) ; et une interface avec un système de gestion d'élément, le système de gestion d'élément comprenant au moins un moteur de traduction de règle et un moteur d'exécution de règle et une interface avec des éléments de réseau, les éléments de réseau comprenant également l'interface avec le système de gestion d'élément et au moins un moteur de traduction de règle et un moteur d'exécution de règle, et les éléments de réseau représentant un nœud ou une fonction de RAN chacun dans le RAN auto-organisateur,
le procédé comprenant les étapes de :
l'obtention, au niveau du composant d'analyse de données, de données se rapportant au réseau d'accès radio auto-organisateur (100a, 100b, ou 100c, 310), les données obtenues incluent des « données massives » extraites à partir du système à « données massives » (110) se rapportant au RAN et des données reçues à partir d'autres sources de données ;
la réalisation, par le composant d'analyse de données (114), d'analyses sur les données obtenues (320) pour identifier une survenue et des interdépendances d'événements et un comportement de réseau ;
la création automatique, par le moteur de création de règle, d'une nouvelle règle de configuration de SON ou l'adaptation d'une règle existante, sur la base des résultats des analyses et la conversion de la règle en une liste de paramètres événement-condition-action par l'identification (340) de paramètres associés à la règle, incluant : un paramètre identifiant un événement de déclenchement ; un paramètre définissant une condition devant être évaluée dans le cas de l'événement de déclenchement ; et un paramètre décrivant une action devant être entreprise lors de la survenue d'un événement de déclenchement ;
la fourniture, par le moteur de création de règle, des paramètres à un moteur de traduction de règle du système de gestion d'élément ou à au moins un élément de réseau pour l'identification, au niveau du moteur de traduction de règle, de quel élément de réseau ou système de gestion peut détecter l'événement et le fait de relayer les paramètres vers un moteur d'exécution de règle dudit élément de réseau ou système de gestion d'élément identifié ;
la détection, par le moteur d'exécution de règle (126) de l'élément de réseau ou du système de gestion d'élément identifié, de l'événement de déclenchement ;
l'évaluation, par le moteur d'exécution de règle (126), de la condition, et le fait d'informer un moteur de configuration (134) qu'il doit réaliser l'action associée à la règle ; et
conformément à la règle, la réalisation d'une action (380) pour changer une configuration d'un élément de réseau (130a, 130b ou 130c).

2. Procédé selon la revendication 1, incluant en outre l'étape d'exécution de la nouvelle règle ou règle adaptée fournie, incluant :
la détermination de la survenue d'un événement de déclenchement (370) ;
l'évaluation de conditions pré-identifiées s'il est déterminé que l'événement de déclenchement est survenu ; et
le fait d'entreprendre une action pré-identifiée sur la base de l'événement de déclenchement et/ou des conditions pré-identifiées évaluées.

3. Procédé selon la revendication 2, incluant en outre les étapes d'identification du moteur d'exécution de règle (126) qui peut détecter l'événement de déclenchement et/ou exécuter l'action devant être entreprise (350).

4. Procédé selon la revendication 3, dans lequel l'étape d'identification survient dans la couche de système de gestion d'élément (120a, 120b ou 120c) ou dans l'élément de réseau (130a, 130b ou 130c).

5. Procédé selon la revendication 4, dans lequel le moteur d'exécution de règle (126) qui peut détecter l'événement de déclenchement et/ou exécuter l'action devant être entreprise est inclus dans la couche de système de gestion d'élément (120a, 120b ou 120c) ou dans l'élément de réseau (130a, 130b ou 130c).

6. Système à « données massives » (110), pour un réseau d'accès radio, RAN, auto-organisateur (100a, 100b ou 100c), pour la création ou l'adaptation d'une règle de configuration de réseau auto-organisateur, SON, le système à « données massives » comprenant : un composant d'analyse de données (114) ; un moteur de création de règle (112) ; et une interface avec un système de gestion d'élément, le système de gestion d'élément comprenant au moins un moteur de traduction de règle et un moteur d'exécution de règle et une interface avec des éléments de réseau, les éléments de réseau comprenant également l'interface avec le système de gestion d'élément et au moins un moteur de traduction de règle et un moteur d'exécution de règle, et les éléments de réseau représentant un nœud ou une fonction de RAN chacun dans le RAN auto-organisateur,
le système à « données massives » étant configuré pour :
obtenir, au niveau du composant d'analyse de données, des données se rapportant au réseau d'accès radio auto-organisateur (100a, 100b, ou 100c, 310), les données obtenues incluent des « données massives » extraites à partir du système à « données massives » (110) se rapportant au RAN et des données reçues à partir d'autres sources de données ;
réaliser, par le composant d'analyse de données (114), des analyses sur les données obtenues (320) pour identifier une survenue et des interdépendances d'événements et un comportement de réseau ;
créer automatiquement, par le moteur de création de règle (112), une nouvelle règle de configuration de SON ou adapter une règle existante, sur la base des résultats des analyses et convertir la règle en une liste de paramètres événement-condition-action par l'identification (340) de paramètres associés à la règle, incluant : un paramètre identifiant un événement de déclenchement ; un paramètre définissant une condition devant être évaluée dans le cas de l'événement de déclenchement ; et un paramètre décrivant une action devant être entreprise lors de la survenue d'un événement de déclenchement ;
fournir, par le moteur de création de règle, les paramètres à un moteur de traduction de règle du système de gestion d'élément ou à au moins un élément de réseau pour l'identification, au niveau du moteur de traduction de règle, de quel élément de réseau ou système de gestion peut détecter l'événement et relayer les paramètres vers un moteur d'exécution de règle dudit élément de réseau ou système de gestion d'élément identifié ;
détecter, par le moteur d'exécution de règle (126) de l'élément de réseau ou du système de gestion d'élément identifié, l'événement de déclenchement ;
évaluer, par le moteur d'exécution de règle (126), la condition, et informer un moteur de configuration (134) qu'il doit réaliser l'action associée à la règle ; et
conformément à la règle, réaliser une action (380) pour changer une configuration d'un élément de réseau (130a, 130b ou 130c) .

7. Système à « données massives » (110) selon la revendication 6, dans lequel le système à « données massives » est en outre configuré pour exécuter la nouvelle règle ou règle adaptée fournie, incluant :
déterminer la survenue d'un événement de déclenchement (370) ;
évaluer des conditions pré-identifiées s'il est déterminé que l'événement de déclenchement est survenu ; et
entreprendre une action pré-identifiée sur la base de l'événement de déclenchement et/ou des conditions pré-identifiées évaluées.

8. Système à « données massives » (110) selon la revendication 7, dans lequel le système à « données massives » est en outre configuré pour identifier le moteur d'exécution de règle (126) qui peut détecter l'événement de déclenchement et/ou exécuter l'action devant être entreprise (350).

9. Système à « données massives » (110) selon la revendication 8, dans lequel l'étape d'identification survient dans la couche de système de gestion d'élément (120a, 120b ou 120c) ou dans l'élément de réseau (130a, 130b ou 130c).

10. Système à « données massives » (110) selon la revendication 9, dans lequel le moteur d'exécution de règle (126) qui peut détecter l'événement de déclenchement et/ou exécuter l'action devant être entreprise est inclus dans la couche de système de gestion d'élément (120a, 120b ou 120c) ou dans l'élément de réseau (130a, 130b ou 130c).
